(19) Europäisches Patentamt
European Patent Office
Office européen des brevets

(11) **EP 4 665 014 A1**

(12) **EUROPEAN PATENT APPLICATION**

(43) Date of publication:
**17.12.2025 Bulletin 2025/51**

(21) Application number: **25168010.4**

(22) Date of filing: **02.04.2025**

(51) International Patent Classification (IPC):
***H04W 52/36*** (2009.01)

(52) Cooperative Patent Classification (CPC):
**H04W 52/367**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.06.2024 US 202418743179**

(71) Applicant: **INTEL Corporation
Santa Clara, CA 95054 (US)**

(72) Inventors:
• **EL HAJJ, Walid**
**06600 Antibes (FR)**
• **ASRIH, Nawfal**
**06600 Mandelieu-la-Napoule (FR)**
• **BALABAN, Nir Yizhak**
**4059300 Kfar Netter (IL)**
• **BHASIN, Sheetal**
**KA 560048 Bangalore (IN)**
• **D'ANGELO, Wilfrid**
**06 06250 Mougins (FR)**
• **KOGOS, Noam**
**M 4703028 Ramat Hasharon (IL)**
• **MEYUHAS, Gil**
**Tel-Aviv (IL)**
• **ROMAN, John**
**Hillsboro, OR 97124 (US)**

(74) Representative: **Viering, Jentschura & Partner
mbB
Patent- und Rechtsanwälte
Am Brauhaus 8
01099 Dresden (DE)**

(54) **DYNAMIC DUTY CYCLE TIME AVERAGING SPECIFIC ABSORPTION RATE AND POWER DENSITY HUMAN EXPOSURE MITIGATION**

(57) A specific absorption rate (SAR) manager, includes a transmitter and a processor, which is configured to determine an average duty cycle of the transmitter during a predefined duration; control the transmitter to transmit at a high duty cycle setting if the average duty cycle is less than or equal to a predefined low SAR/PD duty cycle threshold; and control the transmitter to transmit at a low duty cycle setting if the average duty cycle is greater than or equal to a predefined high SAR/PD duty cycle threshold.

FIG. 2

EP 4 665 014 A1

## Description

## Technical Field

Various aspects of this disclosure generally relate to the management of specific absorption rate and/or power density exposure for wireless devices.

## Background

Specific absorption rate (SAR) or human exposure compliance is managed by detecting when radiofrequency (RF) exposure exceeds a specified limit, such as a limit imposed by a standard or regulation. Conventionally, SAR/power density (PD) is reduced by static power reduction through the use of look-up tables. That is, devices typically use proximity sensors to detect a physical proximity of a user to an antenna. Once a user is detected in close proximity to the antenna, the device may reduce the power accordingly.

This conventional reliance on proximity sensors, however, is not optimal because static power reduction assumes continuous operation at maximum output power; i.e., 100% of the time. Since transmissions under modern wireless protocols seldom include sustained transmissions at full power, this is unrealistic and does not bespeak the manner in which wireless communication occurs in the real world. Moreover, the power reductions that result under these assumptions reduce data throughput performance and network capacity efficiency. As a result, the introduction of time-averaging in real-time represents an improvement over the conventional model of SAR management.

Various procedures have been used for time averaged SAR (TAS) or Power Density. However, these procedures are typically based on dynamic power control, essentially making use of the protocol's ability to vary the power. Nevertheless, some technologies, such as, for example, Bluetooth, are based on time access, and the amounts of transmitted data and effective power are defined by the duty cycle of the transmission, which is a ratio of transmission (TX) to the total time of a transmission frame. Such technologies (e.g., such as Bluetooth) experience difficulties implementing or using such dynamic power variation procedures.

## Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:

FIG. 1 depicts the management of duty cycle reduction according to an aspect of the disclosure;
FIG. 2 depicts a flowchart of a duty cycle management procedure;
FIG. 3 depicts the management of duty cycle reduction according to an aspect of the disclosure; and
FIG. 4 depicts an SAR/PD manager 400, according to an aspect of the disclosure.

## Description

The following detailed description refers to the accompanying drawings that show, by way of illustration, exemplary details and embodiments in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint™, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/-formula/relationship and 'indirect' calculations via lookup or hash tables and other array indexing or searching operations.

While the above descriptions and connected figures may depict components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

Herein is disclosed a dynamic duty cycle time averaging procedure based on duty-cycle time variation (e.g., time back-off). This procedure is suitable, for example, for time access technologies. One particular advantage of this procedure is that it allows the underlying device to remain at maximum power while still maintaining SAR compliance.

There are different time averaging algorithms for human exposure mitigations. As stated above, the majority of these algorithms are based on dynamic power variation, in which the TX power is altered to stay within the regulatory constraints. This power variation, however, is sub-optimal for the technology protocol. For instance, some technologies, such as Bluetooth, primarily use a time access protocol, which means that the transmission optimization is mainly based on time back-off and not power back-off. Such a configuration makes the use of known power back-off strategies difficult or undesirable to implement. One possible complication of using this approach is when network conditions (e.g., poor signal to noise ratio, etc.) require transmission at maximum power to maintain a network connection, but the SAR management protocols limit the TX power to levels less than maximum power. This can result in poor network connectivity, disconnections, and the like.

In contrast to the conventional procedure of reducing the maximum TX power, the strategies and procedures disclosed herein permit devices to transmit at maximum power or to otherwise transmit at power levels that are greater than those that would otherwise be possible under the conventional procedures. is optimal for technologies based on time access protocol e.g. Bluetooth. Using the procedures disclosed herein, a user device may transmit at maximum power. These procedures may optionally coexist with one or more conventional TAS procedures. This may be advantageous, for example, when a user device is transmitting according to a plurality of different wireless transmission protocols, and wherein one protocol is preferably managed with a conventional TAS procedure and the other protocol is preferably managed by the procedures disclosed herein. For example, a user device simultaneously or concurrently transmitting using Institute of Electrical and Electronics Engineers standard 802.11 (Wi-Fi) and Bluetooth may optionally implement both a conventional power management method and the procedures disclosed herein. Further stating, the procedures disclosed herein may also optionally be combined with other known exposure regulation procedures such as proximity-sensor-based solutions or antenna hopping methods.

Transmission power exposure may be mitigated by using a sliding time window averaging procedure to calculate an average duty cycle of a transmission (Avg DC) of a user device during an averaging time (Ta). The Ta may be defined by a regulatory requirement, such as a Ta of 100 seconds, as required by the Federal Communications Commission for frequencies below 3 GHz and a Ta of sixty seconds for frequencies between 3 GHz and 6 GHz, or such as the Canadian requirement of defining the Ta as 360 seconds, independent of the frequency. The principles and methods disclosed herein are, however, not limited to these jurisdictions and may be implemented within any regulatory schema.

The average calculated during this sliding time window averaging procedure may be calculated for each transmission period, which may define a resolution or granularity of the transmission. The procedures disclosed herein define two levels of maximum duty cycle, essentially an upper level and a lower level threshold, which will be described herein as the SAR DC (or upper threshold) and the Lower DC (or lower threshold), respectively. The maximum duty cycle level during a reduced duty cycle state as described herein as Reduced DC, and a non-reduced duty cycle state is described herein as Max DC.

The procedure may generally be described as follows. At each Tr, the Avg DC is calculated for the time-window duration Ta and compared to SAR DC and Lower DC of the active mode to determine if a Dynamic Duty Cycle Reduction (DCR) should be turned ON or OFF to maintain SAR compliance. Turning on the DCR refers to reducing the duty-cycle to a lower level. That is, rather than operating with a high-level duty cycle, engaging the DCR causes the device to operate with a low-level duty cycle. Note that the high-level duty cycle could theoretically refer to 100% duty cycle, although such a high duty cycle would be uncommon; rather, it is more likely that the high-level duty cycle will be a duty cycle value that is less than 100%, but higher than the low-level duty cycle. In an exemplary configuration, the high-level duty cycle may be 70% and the low level may be 45%, although this is merely an example and is not intended to be limiting. When the Avg DC exceeds SAR DC, the DCR is turned ON to limit transmitter maximum duty cycle to a reduced level defined by Reduced DC. When the Avg DC is below the Lower DC, the DCR is turned OFF. Using these strategies, the maximum duty cycle, Max DC, of the transmitter is allowed.

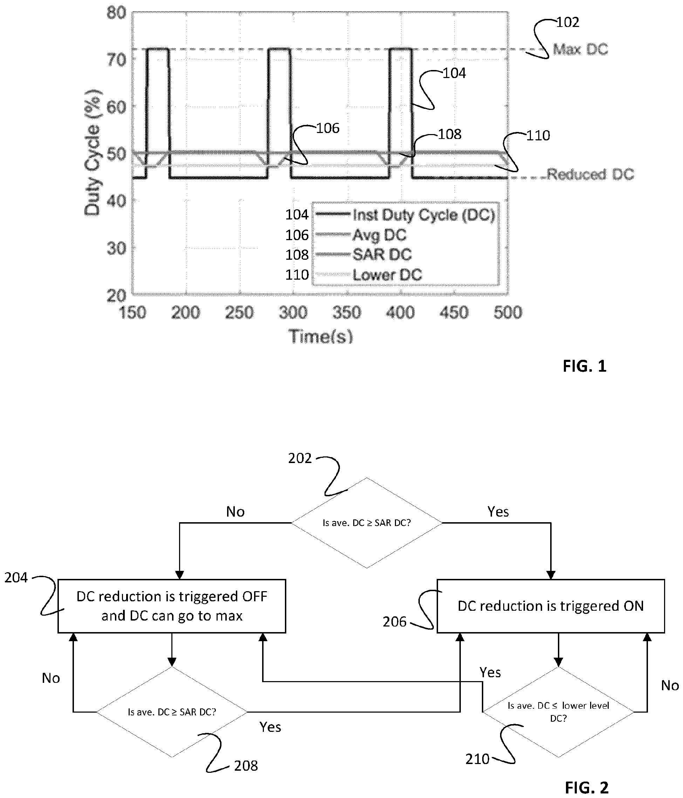

FIG. 1 depicts the management of duty cycle reduction according to an aspect of the disclosure. Specifically, for a given wireless device (e.g., a mobile phone, a tablet, a laptop, etc.) transmitting using a given wireless protocol (e.g., including but not limited to Bluetooth), the device may transmit with a maximum duty cycle 102, which indicates a maximum amount of a given transmission period in which the device in fact transmits. At any point in a given duration, (e.g., 350 seconds are depicted along the x-axis and therefore at any point within these 350 seconds, although 350 is merely an exemplary duration and other durations may be selected depending on the implementation), the device may transmit with an instantaneous duty cycle 104 (e.g., the device may transmit at a duty cycle of 100% or less than 100%, as indicated based on the y-axis). The device's duty cycle may be averaged using a sliding window, and this average is depicted as 106 (e.g., average duty cycle 106 is largely depicted as being equal to the SAR duty cycle 108, but dips below the SAR duty cycle 108 just before a rise in the instantaneous duty cycle 104 and continuing to just before a fall in the instantaneous duty cycle 104). The lower duty cycle threshold 110 is a low power threshold that triggers an increase in instantaneous duty cycle 104 when reached by the average duty cycle 106.

Otherwise stated, a device may be configured to transmit with at least two settings of instantaneous duty cycle: a high setting (depicted as approximately 72%), and a low setting (depicted as approximately 45 dB). The average duty cycle 106 is calculated within a sliding window. Because of the sliding window mechanism, a drop in the instantaneous duty cycle 104 may not immediately cause a drop in the average duty cycle 106. However, after sufficient time has passed that a portion of the high instantaneous duty cycle 104 is no longer in the averaging window, the average duty cycle 106 begins to decrease. When the average duty cycle 106 decreases sufficiently that it reaches the lower duty cycle 110 threshold, the device begins to transmit at the high duty cycle (e.g. see high level of 104) until the average duty cycle 106 reaches the SAR duty cycle 108 threshold.

This may be described in terms of a duty cycle reduction (DCR) function. When the DCR is ON, the average duty cycle 106 is maintained between the SAR duty cycle 108 and the Lower duty cycle 110 by using TAS until the DCR is turned OFF. The maximum allowed duty cycle is then restored to the maximum DC. At each adjustment interval (Tr), SAR/PD compliance is determined in real-time according to the Average duty cycle 106. This procedure can be tailored to be more restrictive or less restrictive by selecting SAR DC, Lower DC and Reduced DC to satisfy the necessary power adjustment and SAR compliance requirements.

FIG. 2 depicts a flowchart of a duty cycle management procedure. Initially, it is determined whether the average duty cycle is greater than or equal to the SAR duty cycle 202. If this is not true (e.g., if the average duty cycle is less than the SAR duty cycle), then the duty cycle reduction is triggered off and the duty cycle is permitted to return to its maximum 204. If, however, the average duty cycle is greater than or equal to the SAR duty cycle, then the duty cycle reduction is triggered on 206.

If the duty cycle reduction is triggered off at 204, then it is next considered whether the average duty cycle is greater than or equal to the SAR duty cycle 208. If not, then the DC reduction remains triggered off and the DC can go to (or remain at) maximum 204. If, however, the average duty cycle is or becomes greater than or equal to the SAR duty cycle, then the DC reduction is triggered on at 206.

If the duty cycle rejection is triggered on at 206, then it is determined whether the average duty cycle is less than a lower level of duty cycle 210. If the average duty cycle is not less than or equal to the lower level duty cycle (e.g., if the average duty cycle is greater than the lower level duty cycle), then the duty cycle reduction remains triggered on at 206. If, however, the average duty cycle is or becomes less than or equal to the lower level duty cycle, then the duty cycle rejection is triggered off, and the duty cycle can go to the maximum as in 204. In this manner, a feedback loop is created in which the duty cycle is caused to alternative between a high level (e.g., a maximum) and a low level based on the relationship of the average duty cycle to the SAR duty cycle.

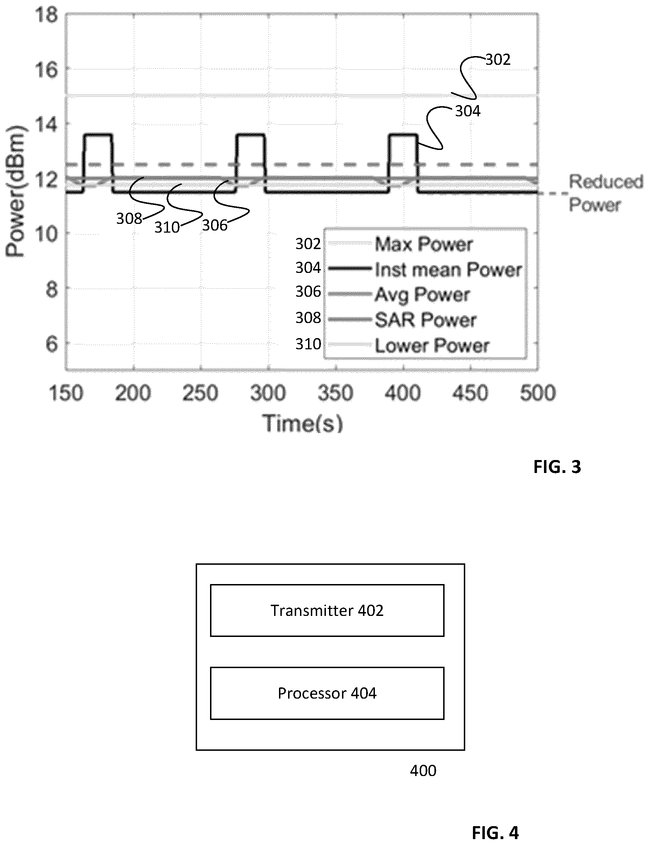

FIG. 3 depicts the management of duty cycle reduction according to an aspect of the disclosure. Specifically, for a given wireless device (e.g., a mobile phone, a tablet, a laptop, etc.) transmitting using a given wireless protocol (e.g., including but not limited to Bluetooth), the device will have a maximum transmit power 302, which is an inherent limitation of the device's hardware components. At any point in a given duration, (e.g., 350 seconds are depicted along the x-axis and therefore at any point within these 350 seconds), the device will transmit with an instantaneous transmit power 304. This power is conventionally averaged using a sliding window, and this average (also described herein as instantaneous mean power) is depicted as 306 (e.g., average power 306 is largely depicted as being equal to the SAR power 308, but dips below the SAR power 308 just before a rise in the instantaneous mean power 304 and continuing to just before a fall in the instantaneous mean power 304). The lower power threshold 310 is a low power threshold that triggers an increase in instantaneous mean power 304 when reached by the average power 306.

Otherwise stated, a device may be configured to transmit with two settings of instantaneous mean power: a high setting (depicted as approximately 13 dB), and a low setting (depicted as approximately 11 dB). The average power 306 is calculated within a sliding window. Because of the sliding window mechanism, a drop in the instantaneous mean power 304 does not immediately cause a drop in the average power 306. However, after sufficient time has passed that a portion of the high instantaneous mean power 304 is no longer in the averaging window, the average power 306 begins to decrease. When the average power decreases sufficiently that it reaches the lower power 310 threshold, the device begins to transmit at the high instantaneous mean power 304.

The SAR elements described herein may be related to power levels. For example, and for devices with static power reduction, human exposure compliance may generally be achieved by reducing the power level from a maximum power (Max Power) allowed by the technology mode to a power level called SAR Power that corresponds to the level to not exceed the exposure limit. In this case, the SAR duty cycle may be understood as a linear ratio between the SAR Power and the Max Power. The instantaneous duty cycle is related to the instantaneous mean power and is a ratio between the instantaneous mean power and the maximum power. The lower duty cycle relates to the lower mean power threshold and is a ratio between Low Power and Max Power. The Reduced DC relates to a lowest mean power level (Reduced Power) and is a ratio between Reduced Power and Max Power.

The main power level required for the algorithm operation is SAR Power, which is defined by regulatory testing for every technology configuration and every platform design. The Low Power and Reduced Power can be derived from the SAR Power using fixed offsets X and Y, respectively, such that (Y>X). X and Y can be selected to improve and/or optimize performance. Note that the effective power can reach Max power at any time since the transmitted power level is leveraged by the Duty cycle of the transmission.

The power parameters with respect to the parameters for the duty cycle management procedure disclosed herein can be expressed as follows:

$$SAR\ DC = \frac{SAR\ Power\ (mW)}{Max\ Power\ (mW)} \tag{1}$$

$$Lower\ DC = \frac{10^{0.1(SAR\ Power\ (dBM)-X)}(mW)}{Max\ Power\ (mW)} \tag{2}$$

$$Reduced\ DC = \frac{10^{0,1(SAR\ Power\ (dbM)-Y)}}{Max\ Power\ (mW)} \tag{3}$$

$$Max\ DC = Max\ Mode\ DC \tag{4}$$

The sliding average of the duty cycle may be an arithmetic mean that may be calculated as follows:

$$Avg_{recent} = Avg_{previous} + DC_{recent} \cdot \frac{1}{N} - DC_{first} \cdot \frac{1}{N} \tag{5}$$

wherein $DC_{recent}$ is a new duty cycle sample used in a current averaging window; $DC_{first}$ is a first DC sample used in a previous averaging window; and N is a number of power samples DC, during the averaging period.

The main power level required for the algorithm operation is referred to herein as the "SAR Power", which may be defined by regulatory testing for every technology configuration and every platform design. The Low Power and Reduced Power can be derived from SAR Power using fixed offsets X, and Y respectively, such that (Y>X). X and Y can be used to achieve increased performance optimization and improvement. Note that the effective power can reach the maximum power any time, since the transmitted power level is leveraged by the duty cycle of the transmission.

The correspondence of FIG.1 in terms of power is shown in FIG.3. In this example Max Power= 15 dBm Max DC=72% , SAR Power =12 dBm, X=0.125 dB, Y=0.25 dB, Ta=100s, Tr=100ms.

FIG. 4 depicts an SAR/PD manager 400, according to an aspect of the disclosure. The SAR/PD manager includes a transmitter 402 and a processor 404. The processor 404 is configured to determine an average duty cycle of the transmitter during a predefined duration; control the transmitter to transmit at a high duty cycle setting if the average duty cycle is less than or equal to a predefined low SAR/PD duty cycle threshold; and control the transmitter to transmit at a low or reduced duty cycle setting if the average duty cycle is greater than or equal to a predefined high SAR/PD duty cycle threshold.

The average duty cycle as described herein may describe a percentage of a permitted duration for transmission in which the transmitter actually transmits. For example, if a permitted transmission time is duration x (which may depend, for example, on a conventional transmission duration according to a protocol, such as a Bluetooth protocol), the duty cycle may the understood as a portion of the permitted transmission time in which the device may transmit. For example, if the transmission period is $x/10,$ the duty cycle could be described as 10%.

The SAR/PD manager may be configured to determine the average duty cycle using a sliding window. That is, the SAR/PD manager may be considered to use a sliding window (ideally a sliding window that is larger than the permitted transmission time) to determine how much time of the permitted transmission times in the window the device actually transmitted.

The SAR/PD manager may be configured to simply the determination of the average duty cycle. That is, rather than having to repeatedly calculate the duty cycle from all samples in a sliding window, the SAR/PD manager may be configured to simplify this process by determining the average duty cycle using the sliding window as a most recent sliding window average, plus a quotient of a duty cycle value for a new sample divided by a number of samples in the most recent sliding window average, minus a quotient of a duty cycle value for a first sample in the most recent sliding window divided by the number of samples in the most recent sliding window average. In this manner, and as the sliding window moves, the oldest sample is discarded and a newest sample is added. The new average is calculated by subtracting from the old average the oldest sample divided by a number of samples in the sliding window and by adding the newest sample divided by the number of samples in the sliding window. In this manner, a new average may be obtained without the need to recalculate an average from each of the previously measured samples.

The SAR/PD manager may optionally be configured to determine the high SAR/PD duty cycle threshold as a quotient of a regulatory SAR limit divided by a maximum transmit power of the transmitter. In this manner, the SAR/PD manager may optionally be considered to calculate the low SAR/PD duty cycle threshold as a quotient of a regulatory SAR limit minus a first predefined buffer or offset, divided by a maximum transmit power of the transmitter. The first predefined buffer or offset may be any number, and it may be selected for a particular implementation. That is, a greater first predefined buffer or offset will result in a lower SAR power threshold, which will require the device to transmit at a lower duty cycle (or alternatively at a lower power) for a longer period of time before the high duty cycle (or alternatively high power) may be resumed.

The reduced power setting may optionally be determined as a quotient of a regulatory SAR limit minus a second predefined buffer or offset, divided by a maximum transmit power of the transmitter. The second predefined buffer or offset may be any number, and it may be selected for a particular implementation. That is, a greater second predefined buffer or offset will result in a lower reduced power setting, which will require the device to transmit at a lower duty cycle (or alternatively at a lower power) for a longer period of time before the high duty cycle (or alternatively high power) may be resumed.

The SAR/PD manager may optionally be configured to operate during a transmission according to any standard promulgated by the Bluetooth Special Interest Group (e.g., according to a Bluetooth standard), although the principles, methods, and devices disclosed herein are not limited to use with Bluetooth. Whatever the standard used (e.g., whether Bluetooth of otherwise), it is expected that the standard may specify a transmission time frame from which the duty cycle will be defined. Should this be the case, it may be preferable to selecting a duration of the sliding window such that it is greater than the transmission time frame, which may simplify the sliding window calculation. For example, in Bluetooth, the transmission frame may be 70ms. In this manner, the duration of the sliding window may be selected to be a longer duration than 70ms, such as, for example, 100ms.

The SAR/PD manager may be configured to instruct a transmitter to transmit at a low or reduced duty cycle setting or a high duty cycle setting, such as based on an average duty cycle being greater than or equal to a predefined high SAR/PD duty cycle threshold and/or greater than or equal to a low SAR/PD duty cycle threshold. That is, if the average duty cycle reaches the high SAR/PD duty cycle threshold, then the SAR/PD manager may control or instruct the transmitter to transmit according to a low or reduced duty cycle setting. Over time, the average duty cycle will decrease until it reaches the lower SAR/PD duty cycle threshold, at which time the SAR/PD manager may control or instruct the transmitter to transmit according to the high duty cycle setting.

The SAR/PD manager may be implemented in any portion, module, or system of the device. For example, in some configurations, the SAR/PD manager may be implemented in a standalone module. In other configurations, the SAR/PD manager may be implemented in a CPU or other application processor. In other configurations, the SAR/PD manager may be implemented in a communications module, a transceiver, a baseband modem, or otherwise.

Further aspects of the disclosure will be described by way of example.

In Example 1, a specific absorption rate (SAR) manager, including a transmitter; a processor, configured to: determine an average duty cycle of the transmitter during a predefined duration; control the transmitter to transmit at a high duty cycle setting if the average duty cycle is less than or equal to a predefined low SAR/PD duty cycle threshold; and control the transmitter to transmit at a low or reduced duty cycle setting if the average duty cycle is greater than or equal to a predefined high SAR/PD duty cycle threshold.

In Example 2, the SAR/PD manager of Example 1, wherein the average duty cycle is a percentage of a permitted duration for transmission in which the transmitter actually transmits.

In Example 3, the SAR/PD manager of Example 1 or 2, wherein the processor is configured to determine the average duty cycle using a sliding window relative to time.

In Example 4, the SAR/PD manager of Example 3, wherein the processor is configured to determine the average duty cycle using the sliding window as a most recent sliding window average, plus a quotient of a duty cycle value for a new sample divided by a number of samples in the most recent sliding window average, minus a quotient of a duty cycle value for a first sample in the most recent sliding window divided by the number of samples in the most recent sliding window average.

In Example 5, the SAR/PD manager of any one of Examples 1 to 4, wherein the high SAR/PD duty cycle threshold is determined as a quotient of a regulatory SAR limit divided by a maximum transmit power of the transmitter.

In Example 6, the SAR/PD manager of any one of Examples 1 to 5, wherein the low SAR/PD duty cycle threshold is determined as a quotient of a regulatory SAR limit minus a first predefined buffer or offset, divided by a maximum transmit power of the transmitter.

In Example 7, the SAR/PD manager of any one of Examples 1 to 6, wherein the low or reduced duty cycle setting is determined as a quotient of a regulatory SAR limit minus a second predefined buffer or offset, divided by a maximum transmit power of the transmitter.

In Example 8, the SAR/PD manager of any one of Examples 1 to 7, wherein the SAR/PD manager is configured to operate during a transmission according to Bluetooth Special Interest Group.

In Example 9, the SAR/PD manager of any one of Examples 1 to 8, wherein a duration of the sliding window is greater than a transmission frame of a wireless transmission protocol implemented by the transmitter.

In Example 10, the SAR/PD manager of any one of Examples 1 to 9, wherein the transmission frame is 70ms and the duration of the sliding window is 100ms.

In Example 11, the SAR/PD manager of any one of Examples 1 to 10, wherein after receiving an instruction to transmit at a low or reduced duty cycle setting based on the average duty cycle being greater than or equal to a predefined high SAR/PD duty cycle threshold, the transmitter is configured to transmit at the low or reduced duty cycle setting.

In Example 12, a non-transitory computer readable medium, including instructions which, if executed by a processor, cause the processor to: determine an average duty cycle of the transmitter during a predefined duration; control the transmitter to transmit at a high duty cycle setting if the average duty cycle is less than or equal to a predefined low SAR/PD duty cycle threshold; and control the transmitter to transmit at a low or reduced duty cycle setting if the average duty cycle is greater than or equal to a predefined high SAR/PD duty cycle threshold.

In Example 13, the non-transitory computer readable medium of Example 12, wherein the average duty cycle is a percentage of a permitted duration for transmission in which the transmitter actually transmits.

In Example 14, the non-transitory computer readable medium of Example 12 or 13, wherein the instructions are further configured to cause the processor to determine the average duty cycle using a sliding window relative to time.

In Example 15, the non-transitory computer readable medium of Example 14, wherein the instructions are further configured to cause the processor to determine the average duty cycle using the sliding window as a most recent sliding window average, plus a quotient of a duty cycle value for a new sample divided by a number of samples in the most recent sliding window average, minus a quotient of a duty cycle value for a first sample in the most recent sliding window divided by the number of samples in the most recent sliding window average.

In Example 16, the non-transitory computer readable medium of any one of Examples 12 to 15, wherein the high SAR/PD duty cycle threshold is determined as a quotient of a regulatory SAR limit divided by a maximum transmit power of the transmitter and the low SAR/PD duty cycle threshold is determined as a quotient of a regulatory SAR limit minus a first predefined buffer or offset, divided by a maximum transmit power of the transmitter.

In Example 17, the non-transitory computer readable medium of any one of Examples 12 to 16, wherein the low or reduced duty cycle setting is determined as a quotient of a regulatory SAR limit minus a second predefined buffer or offset, divided by a maximum transmit power of the transmitter.

In Example 18, the non-transitory computer readable medium of any one of Examples 12 to 17, wherein after receiving an instruction to transmit at a low or reduced duty cycle setting based on the average duty cycle being greater than or equal to a predefined high SAR/PD duty cycle threshold, the instructions are further configured to cause the transmitter to transmit at the low or reduced duty cycle setting.

In Example 19, a specific absorption rate (SAR) manager, including: a transmitter; a managing means, configured to: determine an average duty cycle of the transmitter during a predefined duration; control the transmitter to transmit at a high duty cycle setting if the average duty cycle is less than or equal to a predefined low SAR/PD duty cycle threshold; and control the transmitter to transmit at a low duty cycle setting if the average duty cycle is greater than or equal to a predefined high SAR/PD duty cycle threshold.

In Example 20, the SAR/PD manager of Example 19, wherein the average duty cycle is a percentage of a permitted duration for transmission in which the transmitter actually transmits, and wherein the managing means is configured to determine the average duty cycle using a sliding window relative to time.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

**Claims**

1. A specific absorption rate (SAR) and power density (PD) manager, comprising:

   a transmitter;
   a processor, configured to:

   determine an average duty cycle of the transmitter during a predefined duration;
   control the transmitter to transmit at a high duty cycle setting if the average duty cycle is less than or equal to a predefined low SAR/PD duty cycle threshold; and
   control the transmitter to transmit at a low duty cycle setting if the average duty cycle is greater than or equal to a predefined high SAR/PD duty cycle threshold.

2. The SAR/PD manager of claim 1,
   wherein the average duty cycle is a percentage of a duration for transmission in which the transmitter actually transmits.

3. The SAR/PD manager of any one of claims 1 or 2,
   wherein the processor is configured to determine the average duty cycle using a sliding window relative to time.

4. The SAR/PD manager of claim 3,
   wherein the processor is configured to determine the average duty cycle using the sliding window as a most recent sliding window average, plus a quotient of a duty cycle value for a new sample divided by a number of samples in the most recent sliding window average, minus a quotient of a duty cycle value for a first sample in the most recent sliding window divided by the number of samples in the most recent sliding window average.

5. The SAR/PD manager of any one of claims 1 to 4,
wherein the high SAR/PD duty cycle threshold is determined as a quotient of a regulatory SAR/PD power limit divided by a maximum transmit power of the transmitter.

6. The SAR/PD manager of any one of claims 1 to 5,
wherein the low SAR/PD duty cycle threshold is determined as a quotient of a regulatory SAR power limit minus a first predefined offset, divided by a maximum transmit power of the transmitter.

7. The SAR/PD manager of any one of claims 1 to 6,
wherein the low duty cycle setting is determined as a quotient of a regulatory SAR power limit minus a second predefined buffer, divided by a maximum transmit power of the transmitter.

8. The SAR/PD manager of any one of claims 1 to 7,
wherein the SAR/PD manager is configured to operate during a transmission according to Bluetooth Special Interest Group.

9. The SAR/PD manager of any one of claims 1 to 8,
wherein a duration of the sliding window is greater than a transmission frame of a wireless transmission protocol implemented by the transmitter.

10. The SAR/PD manager of any one of claims 1 to 9,
wherein after receiving an instruction to transmit at a low duty cycle setting based on the average duty cycle being greater than or equal to a predefined high SAR/PD duty cycle threshold, the transmitter is configured to transmit at the low duty cycle setting.

11. The SAR/PD manager of any one of claims 1 to 10,
wherein after receiving an instruction to transmit at a high duty cycle setting based on the average duty cycle being less than or equal to a predefined low SAR/PD duty cycle threshold, the transmitter is configured to transmit at the high duty cycle setting.

12. A non-transitory computer readable medium, comprising instructions which, if executed by a processor, cause the processor to:

determine an average duty cycle of the transmitter during a predefined duration;
control the transmitter to transmit at a high duty cycle setting if the average duty cycle is less than or equal to a predefined low SAR/PD duty cycle threshold; and
control the transmitter to transmit at a low duty cycle setting if the average duty cycle is greater than or equal to a predefined high SAR/PD duty cycle threshold.

13. The non-transitory computer readable medium of claim 12,
wherein the average duty cycle is a percentage of a permitted duration for transmission in which the transmitter actually transmits.

14. The non-transitory computer readable medium of claim 13,
wherein the instructions are further configured to cause the processor to determine the average duty cycle using the sliding window as a most recent sliding window average, plus a quotient of a duty cycle value for a new sample divided by a number of samples in the most recent sliding window average, minus a quotient of a duty cycle value for a first sample in the most recent sliding window divided by the number of samples in the most recent sliding window average.

15. The non-transitory computer readable medium of any one of claims 12 to 14,

wherein the high SAR/PD duty cycle threshold is determined as a quotient of a regulatory SAR limit divided by a maximum transmit power of the transmitter and the low SAR/PD duty cycle threshold is determined as a quotient of a regulatory SAR limit minus a first predefined buffer, divided by a maximum transmit power of the transmitter;

and/or
wherein the low duty cycle setting is determined as a quotient of a regulatory SAR limit minus a second predefined buffer, divided by a maximum transmit power of the transmitter.

FIG. 1

FIG. 2

FIG. 3

400

FIG. 4

Europäisches
Patentamt

European
Patent Office

Office européen
des brevets

## EUROPEAN SEARCH REPORT

**Application Number**

EP 25 16 8010

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/015669 A1 (STRAUCH PAUL EDWARD [US] ET AL) 11 January 2024 (2024-01-11)<br>* paragraph [0057] - paragraph [0060] *<br>* paragraphs [0064], [0066] *<br>* paragraph [0082] *<br>* figures 4A-4C, 5-10 *<br>----- | 1-15 | INV.<br>H04W52/36 |
| X | US 2021/127337 A1 (NADAKUDUTI JAGADISH [US] ET AL) 29 April 2021 (2021-04-29)<br>* paragraph [0155] *<br>* paragraph [0211] - paragraph [0214] *<br>* figures 6,8, 16-18 *<br>----- | 1-15 | |

| | | | TECHNICAL FIELDS SEARCHED (IPC) |
|---|---|---|---|
| | | | H04W |

The present search report has been drawn up for all claims

| Place of search | Date of completion of the search | Examiner |
|---|---|---|
| The Hague | 4 September 2025 | Reville, Lenora |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 8010

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2025

| Patent document cited in search report | Publication date | Patent family member(s) | | Publication date |
|---|---|---|---|---|
| US 2024015669 A1 | 11-01-2024 | CN | 119404564 A | 07-02-2025 |
| | | EP | 4552405 A1 | 14-05-2025 |
| | | KR | 20250034294 A | 11-03-2025 |
| | | US | 2024015669 A1 | 11-01-2024 |
| US 2021127337 A1 | 29-04-2021 | CN | 112703785 A | 23-04-2021 |
| | | CN | 119172843 A | 20-12-2024 |
| | | EP | 3818753 A1 | 12-05-2021 |
| | | EP | 4294092 A2 | 20-12-2023 |
| | | JP | 7434192 B2 | 20-02-2024 |
| | | JP | 7663733 B2 | 16-04-2025 |
| | | JP | 2021529469 A | 28-10-2021 |
| | | JP | 2024063011 A | 10-05-2024 |
| | | KR | 20210025065 A | 08-03-2021 |
| | | US | 2020015171 A1 | 09-01-2020 |
| | | US | 2021127337 A1 | 29-04-2021 |
| | | US | 2023012908 A1 | 19-01-2023 |
| | | US | 2024172126 A1 | 23-05-2024 |
| | | US | 2025261127 A1 | 14-08-2025 |
| | | WO | 2020010232 A1 | 09-01-2020 |

EPO FORM P0459

For more details about this annex : see Official Journal of the European Patent Office, No. 12/82